# FASCICULE DE BREVET EUROPEEN

(11) **EP 2 720 003 B1**
(45) Date de publication et mention de la délivrance du brevet: **25.03.2015**
(21) Numéro de dépôt: 13185814.4
(22) Date de dépôt: 24.09.2013
(51) Int. Cl.: G01F 1/06

(54) **Compteur de fluide à roue à ailettes**
Flügelrad-Fluidzähler
Impeller type fluid flow meter

(30) Priorité: 15.10.2012 FR 1259793
(43) Date de publication de la demande: 16.04.2014
(73) Titulaire: SAPPEL Société Anonyme française, 68304 Saint-Louis (FR)
(72) Inventeur: DENNER, Bruno, 68400 RIEDISHEIM (FR)
(74) Mandataire: Novagraaf Technologies

(56) Documents cités:
- DE-A1- 4 114 978
- FR-A1- 2 566 523
- US-A- 4 561 312
- US-A1- 2009 272 199

## Description

La présente invention concerne le domaine des compteurs de fluide de vitesse à turbine, notamment les compteurs de liquide à turbine destinés à mesurer la consommation d'eau.

Plus particulièrement, l'invention est adaptée à un compteur de fluide de vitesse à turbine à jet unique ou à jets multiples.

Un compteur de fluide de vitesse à turbine présente un boîtier comprenant une chambre de mesure dans laquelle débouchent une tubulure d'entrée et une tubulure de sortie, une turbine présentant des pales et entraînée en rotation dans la chambre de mesure sous l'effet de jet de fluide entrant par la tubulure d'entrée et agissant sur une ou plusieurs pales. Un compteur de ce type est divulgué dans les documents US 4,561,312 et US 2009/0272199 A1.

Le compteur de fluide de vitesse à turbine présente également un boîtier contenant un totaliseur pour compter le nombre de tours de la turbine à laquelle ce dernier est accouplé dans le cas d'un totalisateur sec par une transmission magnétique, et dans le cas d'un totaliseur noyé par une transmission mécanique, et un couvercle transparent recouvrant le totalisateur. Un compteur de ce type est divulgué dans les documents DE 41 14 978 A1 et FR 2 566 523 A1.

Un problème actuel rencontré dans le cas des compteurs de vitesse à turbine réside dans le fait qu'à petit débit, les pales inactives qui ne sont pas entraînées par le jet de fluide entrant dans la chambre de mesure, en d'autres termes qui ne subissent pas la poussée motrice du fluide, ralentissent la turbine.

En particulier, lors du fonctionnement du compteur de fluide de vitesse à turbine, à petit débit, du fait de la faible vitesse de l'écoulement, la turbine est freinée et la performance du compteur sur la mesure des débits est diminuée.

Il existe un besoin de trouver une solution technique permettant de limiter les freins hydrauliques qui résultent du déplacement des pales inactives dans le fluide tout en conservant un maximum de force motrice lorsque le jet de fluide appuie sur la ou les pales actives, ce qui permettrait de réduire les erreurs de mesure réalisées sur les petits débits.

Dans ce contexte, la présente invention a pour but de proposer un compteur de fluide de vitesse à turbine exempt de la limitation précédemment évoquée.

A cette fin, le compteur de fluide de vitesse à turbine comportant un corps longitudinal tournant de turbine équipé de pales longitudinales, des bras de support de pale, régulièrement répartis et reliant les pales au corps tournant de turbine, est remarquable en ce que chaque pale présente sur le bras de support plusieurs éléments longitudinaux distincts de poussée, dont les sections transversales sont agencées de façon à recevoir la poussée du jet de fluide lorsque la pale est active et à permettre une circulation du fluide entre les éléments de poussée lorsque la pale est inactive.

Dans le mode de réalisation préféré de l'invention, chaque pale présente, sur le bras de support, deux éléments longitudinaux de poussée séparés par un espace de passage de fluide, un premier élément de poussée, un deuxième élément de poussée agencé par rapport au premier élément de poussée de façon à limiter l'entrée du jet de fluide dans l'espace de passage de fluide lorsque la pale est active et à permettre la circulation de fluide dans l'espace de passage de fluide suivant un sens aval -amont lorsque la pale est inactive.

Avantageusement, le premier élément de poussée et le corps tournant de turbine sont séparés par un second espace de passage de fluide, de façon à assurer la circulation de fluide dans le second espace de passage de fluide le long d'une paroi longitudinale extérieure du corps tournant de la turbine suivant un sens aval- amont.

Les deux éléments de poussée de la pale présentent ensemble sur le bras de support, en section transversale à l'axe longitudinal de la turbine, une forme sensiblement un L dont la plus grande branche du L est discontinue, cette discontinuité étant le premier espace de passage de fluide.

Le premier élément de poussée présente une zone d'appui et de poussée ayant une surface transversale à l'axe longitudinal de la turbine, de forme courbe.

La zone d'appui du premier élément de poussée et une zone d'appui du deuxième élément de poussée forment ensemble une surface à section transversale à l'axe longitudinal de la turbine, courbe, ovoïde ou sensiblement en arc de cercle.

Le premier élément de poussée présente, une surface transversale ayant une courbure concave pour sa zone d'appui et de poussée, et à l'extrémité de cette zone d'appui une courbure convexe, pour guider le jet de fluide après sa poussée sur la zone d'appui et de poussée vers le premier espace de passage de fluide d'une pale amont inactive et le second espace de passage de fluide de la pale amont inactive.

Le premier élément de poussée présente un corps longitudinal ayant sensiblement une section transversale à l'axe longitudinal de la turbine, en forme de trièdre comprenant une paroi arrière, une paroi avant de poussée et une paroi longitudinale située en regard d'une paroi longitudinale extérieure du corps tournant pour former le second espace de passage de fluide dans le sens aval-amont.

Le deuxième élément de poussée présente un élément longitudinal ayant sensiblement une section transversale à l'axe longitudinal de la turbine, de forme triangulaire qui comporte une paroi arrière, une paroi avant d'extrémité et une paroi avant dont une partie est située en regard avec la paroi arrière du premier élément de poussée pour former le premier espace de passage de fluide.

Le bras de support comporte un voile arrière de support du deuxième élément de poussée, deux voiles arrières de support du premier élément de poussée et un voile avant de support du premier élément de poussée.

A titre d'exemple, la turbine comporte de 3 à 12 pales, le premier espace de passage et le second espace de passage présentent une dimension de quelques millimètres, le diamètre de la turbine est de 5 cm et la longueur de la turbine est de 15 mm.

D'autres caractéristiques et avantages de l'invention ressortiront clairement de la description qui en est faite ci-après, à titre indicatif et nullement limitatif, en référence aux dessins annexés, dans lesquels :
- la figure 1 représente une vue légèrement en perspective de l'intérieur d'un compteur de fluide de vitesse à turbine de l'état de la technique dans lequel peut être logé une turbine selon l'invention;
- la figure 2 représente une vue en perspective d'une turbine selon l'invention ;
- la figure 3 représente une vue de dessus de la turbine selon l'invention ;
- la figure 4 représente une vue avant et en perspective d'une pale de la turbine selon l'invention;
- la figure 5 représente une vue arrière et en perspective de la pale de la turbine selon l'invention.

Le mot 'fluide' se réfère à de l'eau ou à tout liquide ou gaz utilisable avec le compteur de fluide de vitesse à turbine ci-après décrit.

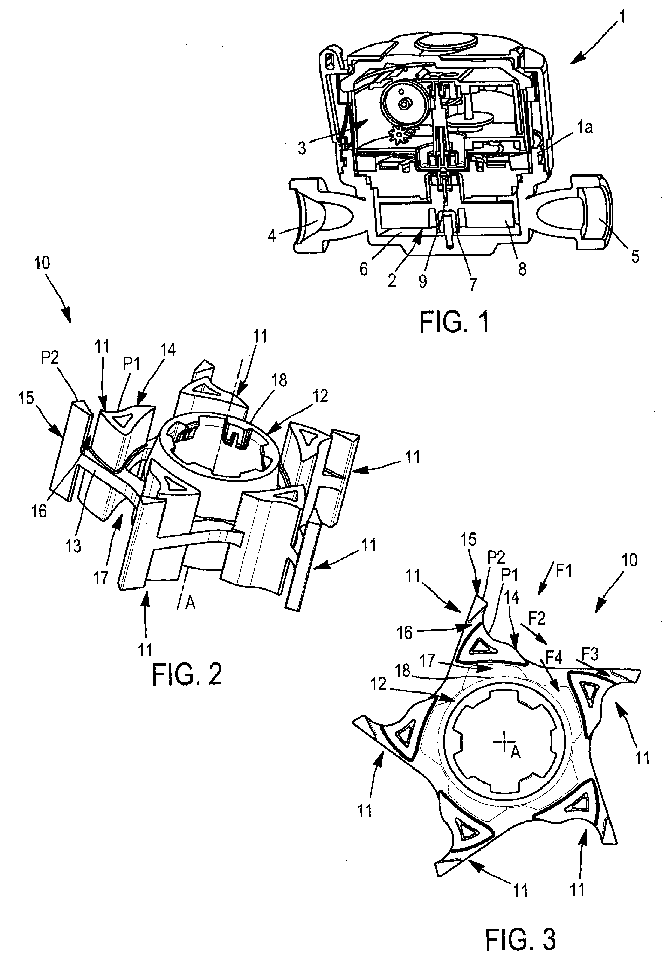

En référence à la figure 1, il est illustré un compteur de fluide de vitesse 1 à turbine à jet unique de l'état de la technique qui présente une partie hydraulique 2 dans laquelle circule le liquide, et un totaliseur 3 où sont affichées les données liées au comptage.

Plus précisément, il présente un boîtier 1a du compteur de fluide, par exemple en bronze ou laiton, de forme générale cylindrique à section circulaire, ayant une tubulure 4 d'entrée de fluide et une tubulure 5 de sortie de fluide, de part et d'autre d'une chambre de mesure 6 du volume de fluide circulant dans la tubulure d'entrée 4 et la tubulure de sortie 5.

La chambre de mesure 6 présente une forme cylindrique coaxiale au boîtier 1a.

Le boitier 1a comporte le totalisateur 3 en partie supérieure cylindrique coaxiale à la chambre de mesure 6, mais de diamètre plus grand.

Dans le fond du boîtier 1a et au centre de la chambre de mesure 6 est montée une crapaudine 7 autour de laquelle pivote la partie mobile 8 du compteur.

La partie mobile 8 du compteur comporte un corps de turbine qui constitue l'élément moteur du compteur de fluide 1 et qui est solidaire d'un axe vertical 9.

La turbine présente des pales entraînées en rotation dans la chambre de mesure 6 sous l'effet du jet de fluide provenant de la tubulure d'entrée 4 et dirigé sur une pale.

Une transmission, ici magnétique, permet d'accoupler la turbine et le totaliseur 3.

Des mécanismes d'engrenages connus de l'état de l'art et reliés à la transmission permettent de compter le nombre de tours effectués par la turbine dans le totaliseur 3.

Le nombre de tours effectués par la turbine est affiché par un index qui peut- être mécanique ou électronique.

Une bague de scellement permet de fixer le totaliseur 3 sur le boîtier 1a de la chambre de mesure 6.

La turbine 10 selon l'invention peut s'appliquer à ce type de compteur de fluide de vitesse à turbine à jet unique.

Elle peut également s'appliquer à d'autres modes de réalisation de compteur de fluide de vitesse à turbine à jet unique, non représentés, présentant d'autres moyens de fixation de la turbine dans la chambre de mesure.

En particulier, le corps cylindrique de la turbine peut notamment présenter une paroi intérieure délimitant un logement dans lequel est inséré et fixé un manchon cylindrique non représenté ici sur les figures, et qui présente un axe de rotation de la turbine, cet axe de rotation venant en appui sur une butée axiale de la chambre de mesure.

Dans ce cas, un palier non représenté et agencé par rapport au manchon, permet de supporter l'axe de rotation de la turbine 10 dans la chambre de mesure.

D'autre part, la turbine 10 selon l'invention est également utilisable pour des compteurs de fluide de vitesse à turbine à jets multiples, en particulier pour les pales inactives situées dans la partie supérieure de la chambre de mesure par laquelle l'eau est évacuée de la chambre de mesure.

Pour toute la suite de la description et dans un souci de simplification, il est fait référence à l'axe longitudinal A de la turbine 10 qui s'étend selon la hauteur ou la longueur de la turbine 10 et se confond avec l'axe de rotation de la turbine 10.

Le terme 'amont' désigne la partie avant d'une pale 11, directement en contact avec le jet de fluide, le terme 'aval' la partie arrière de la pale 11, qui ne reçoit pas directement le jet de fluide, et le terme 'transversal' toute direction appartenant à un plan perpendiculaire à l'axe longitudinal A.

En référence aux figures 2 et 3, la turbine 10 selon l'invention présente un corps tournant 12 central, de forme cylindrique, équipé de bras de support 13 périphériques, régulièrement répartis, et de pales 11 disposées chacune sur un bras de support 13.

Chaque pale 11 présente deux éléments de poussée 14 et 15 situés sur le bras de support 13, un premier élément de poussée 14 principal et un deuxième élément de poussée 15 d'extrémité 11.

Ces éléments de poussée 14 et 15 présentent des sections transversales par rapport à l'axe longitudinal A, agencées de façon à recevoir un jet de fluide sur des zones d'appui et de poussée P1 et P2 lorsque la pale 11 est active, la poussée s'effectuant essentiellement sur le premier élément de poussée 14 principal, la zone de poussée P1 étant plus grande et plus exposée au jet de fluide que la zone de poussée P2.

Les sections transversales de ces éléments de poussée 14 et 15 sont également agencées et positionnés sur le bras de support 13 et par rapport au corps cylindrique 12 de turbine 10, de façon à permettre une circulation de fluide de l'aval vers l'amont lorsque la pale 11 est inactive, entre eux, et entre le premier élément de poussée 14 et le corps cylindrique 12.

Plus précisément, dans le mode de réalisation illustré de l'invention sur les figures 2 à 5, les deux éléments de poussée 14 et 15 sont séparés par un premier espace 16 de passage de fluide ayant la forme en section transversale sensiblement d'un canal.

Un second espace 17 de passage de fluide est prévu entre le premier élément de poussée 14 supporté longitudinalement par le bras de support 13 et une paroi longitudinale extérieure 18 du corps cylindrique 12 de la turbine 10.

Les bras de support 13 présentent une longueur inférieure à celle de la paroi longitudinale extérieure 18 du corps cylindrique 12.

Par exemple à titre illustratif uniquement, les bras de support 13 présentent une longueur égale à un huitième de la longueur de la paroi longitudinale extérieure 18, ce qui permet de laisser circuler une grande quantité de fluide dans le second espace 17 de passage de fluide.

De plus, les bras de support 13 sont situés sur les figures 2 à 5, sensiblement au milieu de la longueur de la paroi longitudinale extérieure 18.

Ils sont inclinés, par rapport à une droite tangente au niveau de leur articulation avec le corps cylindrique 12 de turbine 10, d'un angle, par exemple, mais à titre non limitatif, compris entre 20 et 60°, de façon à augmenter la poussée du jet sur les pales 11.

Le premier élément de poussée 14 et le deuxième élément de poussée 15 présentent des corps longitudinaux qui s'étendent sensiblement selon la même longueur que celle de la paroi longitudinale extérieure 18 du corps cylindrique 12 de turbine 10.

Les deux éléments de poussée 14 et 15 présentent, considérés ensemble sur le bras de support 13, une forme sensiblement en L en section transversale dont la plus grande branche du L est discontinue.

Le premier élément de poussée 14 principal est la plus petite branche du L et une partie inférieure de la plus grande branche du L.

Le deuxième élément de poussée 15 est l'extrémité supérieure de la plus grande branche du L.

Le premier espace 16 de passage de fluide est la discontinuité de la plus grande branche du L entre le premier élément de poussée 14 et le deuxième élément de poussée 15.

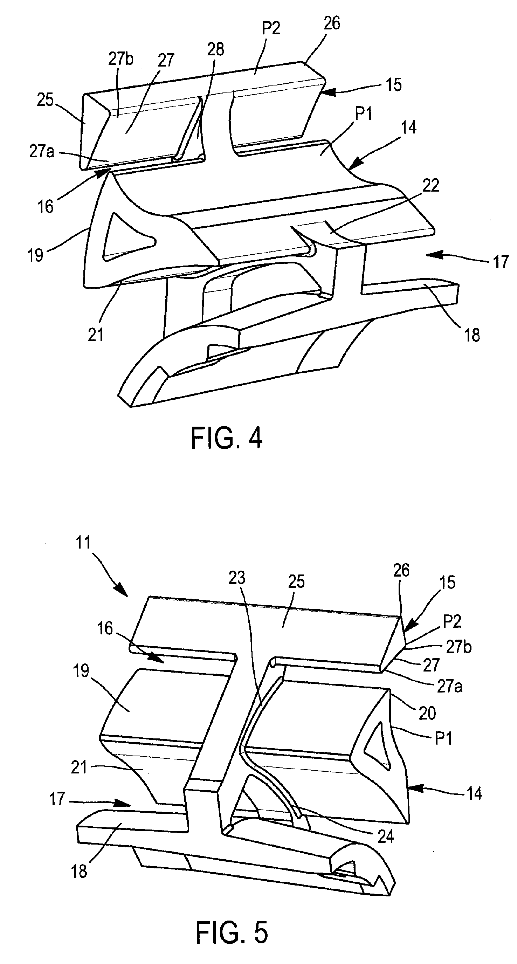

Comme illustré sur la figure 4, le premier élément de poussée 14 présente un corps longitudinal creux ayant sensiblement une surface, en section transversale, de trièdre formée par une paroi arrière 19, une paroi avant 20 de poussée présentant la zone de poussée P1 et une paroi longitudinale 21.

Cette paroi longitudinale 21 est située en regard de la paroi longitudinale extérieure 18 du corps cylindrique 12 pour former le second espace 17 de passage de fluide.

Le premier élément de poussée 14 est tenu, dans le bras de support 13, par un voile avant 22 qui supporte la paroi avant 20, un premier voile arrière 23 et un deuxième voile arrière 24 qui supportent respectivement la paroi arrière 19 et la paroi longitudinale 21, sensiblement au milieu de leur longueur.

Le premier élément de poussée 14 présente sur la paroi avant 20 de poussée, la zone d'appui et de poussée P1 du jet de fluide qui a une surface de courbure concave (en creux), en section transversale à l'axe longitudinal A.

Il présente, sur la paroi avant 20, à une extrémité de sa zone d'appui et de poussée P1, une courbure convexe (bombée) de sa surface transversale, cette courbure étant inversée par rapport à la courbure concave de la zone d'appui et de poussée P1, pour guider le jet de fluide après la poussée du jet de fluide sur la zone d'appui et de poussée P1 vers le premier espace 16 de passage de fluide et le second espace 17 de passage de fluide d'une pale 11 amont inactive.

Ainsi, le jet de fluide vient frapper, sur la pale 11 active, la zone d'appui et de poussée P2 du deuxième élément de poussée 15, puis la zone d'appui et de poussée P1 du premier élément de poussée 14, pour ensuite être redirigé et re-circulé vers le premier espace 16 de passage de fluide et le second espace 17 de passage de fluide de la pale 11 inactive précédente, comme illustré par les flèches F1, F2, F3 et F4 sur la figure 3.

Comme illustré sur la figure 4, le deuxième élément de poussée 15 présente un élément longitudinal rectiligne, ayant sensiblement la forme d'une barre avec une section transversale triangulaire formée par une paroi arrière 25, une première paroi avant d'extrémité 26 et une deuxième paroi avant 27.

Les deux parois avant 26 et 27 présentent la zone d'appui et de poussée P2.

La paroi avant 27 comporte une partie arrière 27a située en regard avec la paroi arrière 19 du premier élément de poussée 14 pour former le premier espace 16 de passage et une partie avant 27b située en avant et en saillie vers la partie amont ou avant de la pale 11 par rapport au jet de fluide F1 et servant de poussée.

La deuxième paroi avant 27 et la zone d'appui et de poussée P1 sont agencées sur le bras de support 13 de façon à présenter, considérées ensemble, en section transversale, une surface de contact avec le jet de fluide, de forme courbe, par exemple ovoïde ou sensiblement en arc de cercle, comme représenté sur la figure 3.

Toute forme de surface de contact avec le jet de fluide est réalisable pour les zones d'appui et de poussée P1 et P2. Par exemple, il peut être réalisé une surface droite perpendiculaire au jet de fluide, sans sortir du cadre de l'invention.

L'agencement du deuxième élément de poussée 15 en avant ou en saillie par rapport au premier élément de poussée 14 du côté amont, la surface de la zone de poussée P2 plus petite que celle de la zone de poussée P1 et la vitesse du jet de fluide F1, permettent un très faible passage du jet de fluide dans le premier espace 16 de passage de la pale active lors de l'action du jet de fluide F1 sur les zones de poussée P1 et P2.

La paroi avant 27 du deuxième élément de poussée 15 est sensiblement parallèle à la paroi arrière 19 du premier élément de poussée 14.

En variante, elle peut également être inclinée, par exemple, d'un angle de 10 °, par rapport à la paroi arrière 19 du premier élément de poussée 14 vers l'amont de façon à avoir une section du premier espace 16 de passage plus grande en aval de la pale 11 qu'en amont pour davantage éviter au jet de fluide d'entrer par le premier espace 16 de passage lorsque la pale 11 est active et pour permettre la circulation de fluide dans le sens aval-amont lorsque la pale 11 est inactive.

La paroi arrière 27 est en son milieu en appui sur un voile incliné 28 arrière d'extrémité du bras de support 13

La turbine 10 peut être réalisée en une seule pièce, par exemple par injection et moulage thermoplastique.

La turbine 10 présente 5 pales, mais ce nombre n'est pas limitatif. Par exemple, elle peut présenter de 3 à 12 pales.

Cette turbine est réalisable suivant toutes les dimensions, pour tout type de compteur de fluide de vitesse à turbine.

A titre d'exemple, mais de façon non limitative, pour une turbine de 5cm de diamètre et de 15 mm de longueur selon l'axe longitudinal A, le premier espace 16 de passage et le second espace 17 de passage présentent des dimensions de quelques millimètres.

## Revendications

1. Compteur de fluide de vitesse (1) à turbine, comportant un corps longitudinal tournant (12) de turbine (10) équipé de pales longitudinales (11), de bras de support (13) de pale (11), régulièrement répartis et reliant les pales (11) au corps tournant (12) de turbine (10), **caractérisé en ce que** chaque pale (11) présente sur le bras de support (13) plusieurs éléments longitudinaux distincts de poussée (14, 15), dont les sections transversales sont agencées de façon à recevoir la poussée du jet de fluide lorsque la pale (11) est active et à permettre une circulation de fluide entre les éléments de poussée (14, 15) lorsque la pale (11) est inactive.

2. Compteur de fluide de vitesse (1) à turbine selon la revendication 1, **caractérisé en ce que** chaque pale (11) présente, sur le bras de support (13), deux éléments longitudinaux de poussée (14, 15) séparés par un espace (16) de passage de fluide, un deuxième élément de poussée (15) étant agencé par rapport à un premier élément de poussée (14) de façon à limiter l'entrée du jet de fluide dans l'espace (16) de passage de fluide lorsque la pale (11) est active et à permettre la circulation de fluide dans l'espace (16) de passage de fluide suivant un sens aval -amont lorsque la pale (11) est inactive.

3. Compteur de fluide de vitesse (1) à turbine selon la revendication 2, **caractérisé en ce que** le premier élément de poussée (14) et le corps tournant (12) de turbine (10) sont séparés par un second espace (17) de passage de fluide, de façon à assurer la circulation de fluide dans le second espace (17) de passage de fluide le long d'une paroi longitudinale extérieure (18) du corps tournant de la turbine (10) suivant un sens aval- amont.

4. Compteur de fluide de vitesse (1) à turbine selon la revendication 3, **caractérisé en ce que** les deux éléments de poussée (14, 15) de la pale (11) présentent ensemble sur le bras de support (13), en section transversale à l'axe longitudinal de la turbine 10, une forme sensiblement un L dont la plus grande branche du L est discontinue, cette discontinuité étant le premier espace (16) de passage de fluide.

5. Compteur de fluide de vitesse (1) à turbine selon l'une des revendications 2 à 4, **caractérisé en ce que** le premier élément de poussée (14) présente une zone d'appui et de poussée (P1) ayant une surface transversale à l'axe longitudinal de la turbine (10), de forme courbe.

6. Compteur de fluide de vitesse (1) à turbine selon l'une des revendications 2 à 5, **caractérisé en ce que** la zone d'appui (P1) du premier élément de poussée (14) et une zone d'appui (P2) du deuxième élément de poussée (15) forment ensemble une surface à section transversale à l'axe longitudinal de la turbine (10), courbe, ovoïde ou sensiblement en arc de cercle.

7. Compteur de fluide de vitesse (1) à turbine selon l'une des revendications 5 à 6, **caractérisé en ce que** le premier élément de poussée (14) présente, une surface transversale ayant une courbure concave pour sa zone d'appui et de poussée (P1), et à l'extrémité de cette zone d'appui (P1) une courbure convexe, pour guider le jet de fluide après sa poussée sur la zone d'appui et de poussée (P1) vers le premier espace (16) de passage de fluide d'une pale (11) amont inactive et le second espace (17) de passage de fluide de la pale (11) amont inactive.

8. Compteur de fluide de vitesse (1) à turbine selon l'une des revendications 3 à 7, **caractérisé en ce que** le premier élément de poussée (14) présente un corps longitudinal ayant sensiblement une section transversale à l'axe longitudinal de la turbine (10), en forme de trièdre comprenant une paroi arrière (19), une paroi avant (20) de poussée et une paroi longitudinale (21) située en regard de la paroi longitudinale extérieure (18) du corps tournant (12) pour former le second espace (17) de passage de fluide dans le sens aval-amont.

9. Compteur de fluide de vitesse (1) à turbine selon la revendication 8, **caractérisé en ce que** le deuxième élément de poussée (15) présente un élément longitudinal ayant sensiblement une section transversale à l'axe longitudinal de la turbine (10), de forme triangulaire qui comporte une paroi arrière (25), une paroi avant d'extrémité (26) et une paroi avant (27) dont une partie est située en regard avec la paroi arrière (19) du premier élément de poussée (14) pour former le premier espace (16) de passage de fluide.

10. Compteur de fluide de vitesse (1) à turbine selon l'une des revendication 2 à 9, **caractérisé en ce que** le bras de support (13) comporte un voile arrière (28) de support du deuxième élément de poussée (15), deux voiles arrières (23, 24) de support du premier élément de poussée (14) et un voile avant (22) de support du premier élément de poussée (14).

11. Compteur de fluide de vitesse (1) à turbine selon l'une des revendications 1 à 10, **caractérisé en ce que** la turbine (10) comporte de 3 à 12 pales (11).

12. Compteur de fluide de vitesse (1) à turbine l'une des revendications 3 à 11, **caractérisé en ce que** le premier espace (16) de passage et le second espace (17) de passage présentent une dimension de quelques millimètres, le diamètre de la turbine (10) est de 5 cm et la longueur de la turbine (10) est de 15 mm.

## Patentansprüche

1. Fluidgeschwindigkeitsturbinenradzähler (1), umfassend einen Längsdrehkörper (12) eines Turbinenrads (10), der mit Längsschaufeln (11) und gleichmäßig verteilten Stützarmen (13) für die Schaufeln (11), die die Schaufeln (11) mit dem Drehkörper (12) des Turbinenrads (10) verbinden, ausgestattet ist, **dadurch gekennzeichnet, dass** jede Schaufel (11) an dem Stützarm (13) mehrere getrennte Axialdrucklängselemente (14, 15) aufweist, deren Querschnitte dazu angeordnet sind, den Axialdruck des Fluidstrahls aufzunehmen, wenn die Schaufel (11) aktiv ist, und eine Fluidzirkulation zwischen den Axialdruckelementen (14, 15) zu gestatten, wenn die Schaufel (11) inaktiv ist.

2. Fluidgeschwindigkeitsturbinenradzähler (1) nach Anspruch 1, **dadurch gekennzeichnet, dass** jede Schaufel (11) an dem Stützarm (13) zwei Axialdrucklängselemente (14, 15) aufweist, die durch einen Fluiddurchgangsraum (16) getrennt sind, wobei ein zweites Axialdruckelement (15) bezüglich eines ersten Axialdruckelements (14) dazu angeordnet ist, den Eintritt des Fluidstrahls in den Fluiddurchgangsraum (16) zu begrenzen, wenn die Schaufel (11) aktiv ist, und die Fluidzirkulation in dem Fluiddurchgangsraum (16) gemäß einer stromabwärtsnach-stromaufwärts-Richtung zu gestatten, wenn die Schaufel (11) inaktiv ist.

3. Fluidgeschwindigkeitsturbinenradzähler (1) nach Anspruch 2, **dadurch gekennzeichnet, dass** das erste Axialdruckelement (14) und der Drehkörper (12) des Turbinenrads (10) durch einen zweiten Fluiddurchgangsraum (17) getrennt sind, um die Fluidzirkulation in dem zweiten Fluiddurchgangsraum (17) entlang einer Längsaußenwand (18) des Drehkörpers des Turbinenrads (10) gemäß einer stromabwärts-nachstromaufwärts-Richtung zu gestatten.

4. Fluidgeschwindigkeitsturbinenradzähler (1) nach Anspruch 3, **dadurch gekennzeichnet, dass** die beiden Axialdruckelemente (14, 15) der Schaufel (11) zusammen an dem Stützarm (13) im Querschnitt bezüglich der Längsachse des Turbinenrads (10) eine im Wesentlichen L-förmige Gestalt bilden, wobei der längere Arm des L unterbrochen ist, wobei diese Unterbrechung der erste Fluiddurchgangsraum (16) ist.

5. Fluidgeschwindigkeitsturbinenradzähler (1) nach einem der Ansprüche 2 bis 4, **dadurch gekennzeichnet, dass** das erste Axialdruckelement (14) einen ersten Auflage- und Axialdruckbereich (P1) aufweist, der eine gekrümmte Querschnittsfläche zur Längsachse des Turbinenrads (10) hat.

6. Fluidgeschwindigkeitsturbinenradzähler (1) nach einem der Ansprüche 2 bis 5, **dadurch gekennzeichnet, dass** der Auflagebereich (P1) des ersten Axialdruckelements (14) und ein Auflagebereich (P2) des zweiten Axialdruckelements (15) zusammen eine Fläche mit gekrümmtem, ovalem oder im Wesentlichen kreisbogenförmigem Querschnitt bezüglich der Längsachse des Turbinenrads (10) bilden.

7. Fluidgeschwindigkeitsturbinenradzähler (1) nach einem der Ansprüche 5 bis 6, **dadurch gekennzeichnet, dass** das erste Axialdruckelement (14) eine Querschnittsfläche aufweist, die eine konkave Krümmung für ihren Auflage- und Axialdruckbereich (P1) und am Ende dieses Auflagebereichs (P1) eine konvexe Krümmung hat, um den Fluidstrahl nach seinem Axialdruck auf den Auflage- und Axialdruckbereich (P1) zu dem ersten Fluiddurchgangsraum (16) einer inaktiven stromaufwärtigen Schaufel (11) und dem zweiten Fluiddurchgangsraum (17) der inaktiven stromaufwärtigen Schaufel (11) zu leiten.

8. Fluidgeschwindigkeitsturbinenradzähler (1) nach einem der Ansprüche 3 bis 7, **dadurch gekennzeichnet, dass** das erste Axialdruckelement (14) einen Längskörper aufweist, der im Wesentlichen einen dreiflächenförmigen Querschnitt bezüglich der Längsachse des Turbinenrads (10) hat und eine Rückwand (19), eine Axialdruckvorderwand (20) und eine Längswand (21), die sich gegenüber der Längsaußenwand (18) des Drehkörpers (12) befindet, umfasst, um den zweiten Fluiddurchgangsraum (17) in der stromabwärts-nachstromaufwärts-Richtung zu bilden.

9. Fluidgeschwindigkeitsturbinenradzähler (1) nach Anspruch 8, **dadurch gekennzeichnet, dass** das zweite Axialdruckelement (15) ein Längselement aufweist, das im Wesentlichen einen dreieckigen Querschnitt bezüglich der Längsachse des Turbinenrads (10) hat und eine Rückwand (25), eine Vorderendwand (26) und eine Vorderwand (27), von der sich ein Teil gegenüber der Rückwand (19) des ersten Axialdruckelements (14) befindet, um den ersten Fluiddurchgangsraum (16) zu bilden, umfasst.

10. Fluidgeschwindigkeitsturbinenradzähler (1) nach einem der Ansprüche 2 bis 9, **dadurch gekennzeichnet, dass** der Stützarm (13) einen hinteren Steg (28) zum Stützen des zweiten Axialdruckelements (15), zwei hintere Stege (23, 24) zum Stützen des ersten Axialdruckelements (14) und einen vorderen Steg (22) zum Stützen des ersten Axialdruckelements (14) umfasst.

11. Fluidgeschwindigkeitsturbinenradzähler (1) nach einem der Ansprüche 1 bis 10, **dadurch gekennzeichnet, dass** das Turbinenrad (10) 3 bis 12 Schaufeln (11) aufweist.

12. Fluidgeschwindigkeitsturbinenradzähler (1) nach einem der Ansprüche 3 bis 11, **dadurch gekennzeichnet, dass** der erste Durchgangsraum (16) und der zweite Durchgangsraum (17) eine Abmessung von einigen Millimetern aufweisen und der Durchmesser des Turbinenrads (10) 5 cm beträgt und die Länge des Turbinenrads (10) 15 mm beträgt.

## Claims

1. Fluid velocity turbine meter (1) including a rotatable longitudinal body (12) of a turbine (10) equipped with longitudinal blades (11) and regularly distributed support arms (13) of the blades (11) connecting the blades (11) to the rotatable body (12) of the turbine (10), **characterized in that** each blade (11) has a plurality of separate longitudinal thrust members (14, 15) on the support arm (13), the cross sections of which are adapted to receive the thrust of the fluid jet when the blade (11) is active and to allow circulation of fluid between the thrust members (14, 15) when the blade (11) is inactive.

2. Fluid velocity turbine meter (1) according to Claim 1, **characterized in that** each blade (11) has on the support arm (13) two longitudinal thrust members (14, 15) separated by a fluid passage space (16), a second thrust member (15) being arranged relative to a first thrust member (14) to limit entry of the fluid jet into the fluid passage space (16) when the blade (11) is active and to allow circulation of fluid in a downstream-to-upstream direction in the fluid passage space (16) when the blade (11) is inactive.

3. Fluid velocity turbine meter (1) according to Claim 2, **characterized in that** the first thrust member (14) and the rotatable body (12) of the turbine (10) are separated by a second fluid passage space (17) so that fluid circulates in the second fluid passage space (17) along an exterior longitudinal wall (18) of the rotatable body of the turbine (10) in a downstream-to-upstream direction.

4. Fluid velocity turbine meter (1) according to Claim 3, **characterized in that** the two thrust members (14, 15) of the blade (11) on the support arm (13), when taken together, have in cross section relative to the longitudinal axis of the turbine (10) substantially an L-shape the longer branch of which L-shape is discontinuous, this discontinuity constituting the first fluid passage space (16).

5. Fluid velocity turbine meter (1) according to any one of Claims 2 to 4, **characterized in that** the first thrust member (14) includes a bearing and thrust area (P1) having a curved surface transverse to the longitudinal axis of the turbine (10).

6. Fluid velocity turbine meter (1) according to any one of Claims 2 to 5, **characterized in that** the bearing area (P1) of the first thrust member (14) and a bearing area (P2) of the second thrust member (15) together form a surface that is in cross section relative to the longitudinal axis of the turbine (10) of curved, oval or substantially circular arc shape.

7. Fluid velocity turbine meter (1) according to either of Claims 5 and 6, **characterized in that** the first thrust member (14) includes a transverse surface having a concave curvature for its bearing and thrust area (P1) and a convex curvature at the end of this bearing and thrust area (P1) to guide the fluid jet toward the first fluid passage space (16) of an inactive upstream blade (11) and the second fluid passage space (17) of the inactive upstream blade (11) after its thrust has been exerted on the bearing and thrust area (P1).

8. Fluid velocity turbine meter (1) according to any one of Claims 3 to 7, **characterized in that** the first thrust member (14) includes a longitudinal body having in cross section relative to the longitudinal axis of the turbine (10) a substantially trihedral shape comprising a rear wall (19), a thrust front wall (20) and a longitudinal wall (21) facing the exterior longitudinal wall (18) of the rotatable body (12) to form the second fluid passage space (17) in the downstream-to-upstream direction.

9. Fluid velocity turbine meter (1) according to Claim 8, **characterized in that** the second thrust member (15) includes a longitudinal member having in cross section relative to the longitudinal axis of the turbine (10) a substantially triangular shape that includes a rear wall (25), an end front wall (26) and a front wall (27) part of which faces the rear wall (19) of the first thrust member (14) to form the first fluid passage space (16).

10. Fluid velocity turbine meter (1) according to any one of Claims 2 to 9, **characterized in that** the support arm (13) includes a rear web (28) for supporting the second thrust member (15), two rear webs (23, 24) for supporting the first thrust member (14), and a front web (22) for supporting the first thrust member (14).

11. Fluid velocity turbine meter (1) according to any one of Claims 1 to 10, **characterized in that** the turbine (10) includes 3 to 12 blades (11).

12. Fluid velocity turbine meter (1) according to any one of Claims 3 to 11, **characterized in that** the first passage space (16) and the second passage space (17) have a dimension of a few millimeters, the diameter of the turbine (10) is 5 cm and the length of the turbine (10) is 15 mm.
